# EUROPEAN PATENT SPECIFICATION

(11) **EP 4 428 697 B1**
(45) Date of publication and mention of the grant of the patent: **27.08.2025**
(21) Application number: 21965180.9
(22) Date of filing: 26.11.2021
(51) Int. Cl.: G06F 3/06, G06F 12/02

(54) **DATA SYNCHRONIZATION METHOD AND RELATED DEVICE**
DATENSYNCHRONISATIONSVERFAHREN UND ZUGEHÖRIGE VORRICHTUNG
PROCÉDÉ DE SYNCHRONISATION DE DONNÉES ET DISPOSITIF ASSOCIÉ

(43) Date of publication of application: 11.09.2024
(73) Proprietor: Huawei Technologies Co., Ltd., Shenzhen, Guangdong 518129 (CN)
(72) Inventor: LV, Jiantao, Shenzhen, Guangdong 518129 (CN); SHEN, Shaofeng, Shenzhen, Guangdong 518129 (CN)
(74) Representative: Maiwald GmbH
(86) International application number: PCT/CN2021/133456
(87) International publication number: WO 2023/092446

(56) References cited:
- CN-A- 111 752 853
- CN-A- 111 752 858
- CN-A- 112 286 835
- US-A1- 2016 147 468
- US-A1- 2021 026 777
- US-B1- 9 927 980

## Description

### TECHNICAL FIELD

This application relates to the field of data processing, and specifically, to a data synchronization method and a related device.

### BACKGROUND

Currently, a data storage system includes a host and a storage device. The host includes a double data rate synchronous dynamic random access memory (Double Data Rate SDRAM, DDR), and the storage device includes a storage controller and a not and (Not And, NAND) flash, where the storage controller includes a static random access memory (Static Random Access Memory, SRAM). The storage device has a set of logical address to physical address (Logical Address to Physical address, L2P for short) mapping data, and the L2P mapping data needs to be loaded into the SRAM in the storage controller when the storage device is initialized. A larger storage capacity of the storage device indicates a larger capacity of the SRAM that is needed to store the L2P mapping data. Because an increase in the capacity of the SRAM significantly affects manufacturing costs and power consumption of the storage device, in a low-cost or low-power storage device, only a part of the L2P mapping data is loaded into the SRAM of the storage controller, and the remaining L2P mapping data is stored in the NAND flash. Because the part of L2P information stored in the NAND flash is not loaded into the SRAM of the storage controller, when the storage device has I/O access of the host, but data cannot be hit by using the L2P mapping data cached in the SRAM of the storage controller, I/O read/write can be performed only after the remaining L2P mapping data is loaded from the NAND flash to the SRAM. Consequently, I/O performance of the storage device is seriously deteriorated.

For the foregoing problem, an existing data storage method is to use the DDR in the host to cache the L2P mapping data, so as to increase a size of the L2P mapping data in a cache. The method can reduce table reading overheads before I/O read. However, the L2P mapping data may change with an I/O write request of the host in the foreground and an operation (such as garbage collection) of the storage device in the background. Because an entry is cached in the host in advance, after an entry of the L2P mapping data in the storage device changes, the entry cached in the host is inconsistent with the entry in the storage device. Entry inconsistency needs to be detected to prevent misuse, to prevent the host from reading incorrect data.

Currently, the storage device uses a bit (bit) bitmap to indicate whether the entry of the L2P mapping data is modified. After the entry is modified, when processing an I/O request of the host, the storage device does not use the L2P mapping data carried in the I/O request of the host, to resolve a problem of misuse of the previous entry. However, because entry update of the L2P mapping data and I/O request delivery are performed in parallel, the following state exists: The storage device has synchronized the modified entry to the host. Because the storage device considers that the entry is consistent after the synchronization, the storage device clears the bit bitmap to indicate that the entry has been synchronized. Because the entry update and the I/O request delivery are performed in parallel, there are in-transmit I/O requests before the storage device completes the entry update. Because entries carried in these in-transmit I/O requests are I/O requests that have been delivered before the synchronization, I/O requests received by the storage device are still entries before the updating, and the storage device misuses the entries before the updating and reads incorrect data.

To resolve the problem of entry misuse that is caused because the entry update and the I/O request delivery are performed in parallel, currently, before each time of entry synchronization, the storage device indicates the host to clear all in-transmit I/O requests. However, in the method, the host needs to wait for all delivered I/O requests to return to the host, and in a process of waiting for the I/O requests to return to the host, the host cannot deliver a new I/O request. Consequently, the I/O performance of the storage device cannot meet a requirement.

Therefore, the foregoing technical problem needs to be resolved urgently.

US 2021/026777 A1 discloses a memory system comprising a memory device for storing data. A controller is used for generating and managing map data including a logical address of an external device and a physical address of the memory device corresponding to the logical address. The controller uploads the latest version of the uploaded map data to the external device based on one of dirty information or access information. The dirty information indicates whether a physical address corresponding to a logical address in the uploaded map data has been changed. The access information indicates whether an access request for the logical address in the uploaded map data has been made from the external device.

### SUMMARY

The invention is set out in the appended set of claims. The dependent claims set out particular embodiments. Embodiments of this application provide a data synchronization method and a related device, so that L2P mapping data synchronization and read request delivery can be implemented in parallel, an in-transmit read request does not need to be reclaimed before the synchronization, and I/O performance of a storage device is effectively improved.

According to a first aspect, this application provides a data synchronization method, applied to a storage device. The storage device is used in a data storage system, and the data storage system further includes a host. The data synchronization method includes the following steps: When first logical address to physical address L2P mapping data in the storage device changes, the storage device determines a second version number and a third version number based on a first version number and a version number sequence that correspond to the first L2P mapping data, where the version number sequence is a sequence of a plurality of cyclically arranged version numbers, the second version number is the 1^{st} version number after the first version number in the version number sequence, and the third version number is the 2^{nd} version number after the first version number in the version number sequence. When the third version number is different from a request version number currently stored in the storage device, the storage device determines the second version number as a version number of second L2P mapping data, and sends a first synchronization request to the host, where the first synchronization request is used to request to synchronize the second L2P mapping data and the second version number to the host, the second L2P mapping data is changed first L2P mapping data, the request version number is a version number carried in a first read request that is most currently received by the storage device from the host, and the request version number is a version number of L2P mapping data stored in the host when the first read request is generated. When the third version number is the same as the request version number, the storage device determines the second version number as the version number of the second L2P mapping data, and uses the second L2P mapping data and the second version number as to-be-synchronized data, where the to-be-synchronized data is data to be synchronized to the host.

The L2P mapping data may be L2P mapping data corresponding to all or some of entries in the storage device. A quantity of the plurality of version numbers is Y, each of the Y version numbers is determined by N bits of data, N is an integer greater than or equal to one, and Y is an integer less than or equal to 2^{N}.

For example, N is 2. In this case, version numbers determined by two bits of data are 0, 1, 2, and 3. In this case, Y may be 2, 3, or 4. When Y is 2, any two version numbers from 0, 1, 2, and 3, for example, 0 and 1, 0 and 2, 0 and 3, and 1 and 2, may be selected as version numbers of the L2P mapping data of the storage device. Similarly, when Y is 4, four version numbers 0, 1, 2, and 3 are used as version numbers of the L2P mapping data of the storage device. After the Y version numbers are selected, the Y version numbers are cyclically arranged to obtain a version number sequence. The Y version numbers may be arranged according to a preset sorting rule, and then the arranged Y version numbers are cycled, to obtain the version number sequence. The preset sorting rule may be set based on an actual situation, and is not specifically limited.

It should be noted that in embodiments of this application, two different version numbers are allocated, based on the version number sequence, to the L2P mapping data in the storage device before and after the change. For example, the version number sequence is 1, 2, and 3, and an initial version number of the L2P mapping data is 1. When the L2P mapping data changes, a version number corresponding to changed L2P mapping data is 2. When the L2P mapping data whose version number is 2 re-changes, a version number corresponding to re-changed L2P mapping data is 3.

According to the data synchronization method in embodiments of this application, when the first L2P mapping data in the storage device changes, the second version number and the third version number are first determined based on the first version number and the version number sequence that correspond to the first L2P mapping data. Before the second L2P mapping data and the second version number are synchronized to the host, whether the third version number is the same as the request version number currently stored in the storage device needs to be verified. When the foregoing two version numbers are the same, it is determined that the version number may be "wrapped", and the second L2P mapping data and the second version number may not be synchronized to the host. The synchronization is suspended to ensure that the storage device can determine that the L2P mapping data varies with a version number. This avoids a case in which, after the second L2P mapping data and the second version number are synchronized to the host, because the L2P mapping data in the storage device continues changing and a version number of changed L2P mapping data is the third version number, version number wrapping really occurs, and the storage device reads incorrect data when processing a read request of the host, and uses the second L2P mapping data and the second version number as the to-be-synchronized data. When the third version number is different from the current request version number, the second version number is determined as the version number of the second L2P mapping data, and the storage device sends the first synchronization request to the host to request to synchronize the second L2P mapping data and the second version number to the host. Correspondingly, when determining that the first synchronization request meets a synchronization condition, the host sends the first synchronization indication information to the storage device, to enable the storage device to synchronize, based on the first synchronization indication information, the second L2P mapping data and the second version number to the host.

In conclusion, whether the second version number and the second L2P mapping data are allowed to be synchronized to the host is determined by determining whether the third version number is the same as the request version number, to ensure that the storage device can determine whether the L2P mapping data is the same by determining whether a version number of local L2P mapping data is the same as a version number carried in an I/O read request. In addition, according to the data synchronization method in embodiments of this application, an in-transmit read request does not need to be reclaimed before the L2P mapping data is synchronized. Therefore, the L2P mapping data synchronization and read request delivery can be implemented in parallel, to effectively improve I/O performance of the storage device.

In some possible embodiments of the first aspect, the data synchronization method further includes the following steps: The storage device receives a second read request from the host, where the second read request carries a version number of L2P mapping data stored in the host when the second read request is generated, and the second read request is received by the storage device after the first read request. When the version number carried in the second read request is different from the version number carried in the first read request, the storage device updates the request version number to the version number carried in the second read request.

A process of synchronizing the L2P mapping data is parallel to a process of delivering the read request by the host.

In embodiments of this application, the host may deliver the second read request based on a requirement of the host, where the second read request carries the version number of the L2P mapping data stored in the host when the second read request is generated. When determining that the version number carried in the second read request is different from the version number carried in the first read request (that is, the latest request version number currently stored in the storage device), the storage device updates the request version number to the version number carried in the second read request, to ensure that the version number recorded by the storage device is the version number carried in the read request that is most recently received from the host. On the contrary, when the version number carried in the second read request is the same as the version number carried in the first read request, the request version number is not updated.

In some possible embodiments of the first aspect, the data synchronization method further includes the following step: When the updated request version number is different from the third version number, and the storage device has the to-be-synchronized data, the storage device sends a second synchronization request to the host, where the second synchronization request is used to request to synchronize the to-be-synchronized data to the host.

In embodiments of this application, when the synchronization is suspended, the version number wrapping can be canceled only after the request version number is updated. After it is determined that the version number is to be wrapped, after a new read request from the host is received and the request version number is updated, the updated request version number is different from the third version number. In this case, it is determined that the version number wrapping is canceled. When the wrapping is canceled and the storage device has the to-be-synchronized data, the storage device sends the second synchronization request to the host to request to synchronize the to-be-synchronized data to the host.

In some possible embodiments of the first aspect, the synchronizing the second L2P mapping data and the second version number to the host specifically includes the following step: sending a host performance booster HPB table to the host, where the HPB table includes the second L2P mapping data and the second version number, where an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table.

Further, when M is less than the first difference, Q bits of the entry in the HPB table are used to store integrity check information of the entry, where Q is a difference between the first difference and M.

The existing HPB table is used to synchronize the L2P mapping data and the version number, and this can effectively save the development cost of a data synchronization protocol between the host and the storage device.

In some possible embodiments of the first aspect, the data synchronization method further includes the following step: When the third version number is the same as the request version number, and the second L2P mapping data changes, the storage device updates the second L2P mapping data to third L2P mapping data, where the third L2P mapping data is the changed second L2P mapping data.

In embodiments of this application, when the version number is wrapped and the second L2P mapping data changes, the storage device determines a version number of changed second L2P mapping data (that is, the third L2P mapping data) as the second version number. In this case, the to-be-synchronized data is the third L2P mapping data and the second version number. Simply, when the version number is wrapped and the L2P mapping data changes, the storage device still determines the version number of the changed L2P mapping data as the second version number, and updates the updated L2P mapping data to the to-be-synchronized data.

According to a second aspect, this application further provides a data synchronization method, applied to a host. The host is used in a data storage system, and the data storage system further includes a storage device. The method includes the following steps: The host receives a first synchronization request sent by the storage device, where the first synchronization request is used to request to synchronize second L2P mapping data and a second version number, where the first synchronization request is sent when the storage device determines that a third version number is different from a request version number currently stored in the storage device; the second version number and the third version number are determined, based on a first version number and a version number sequence that correspond to first L2P mapping data, when the storage device determines that the first L2P mapping data changes, the version number sequence is a sequence of a plurality of cyclically arranged version numbers, the second version number is the 1^{st} version number after the first version number in the version number sequence, and the third version number is the 2^{nd} version number after the first version number in the version number sequence; and the second L2P mapping data is changed first L2P mapping data, the request version number is a version number carried in a first read request that is most currently received by the storage device from the host, and the request version number is a version number of L2P mapping data stored in the host when the first read request is generated. When the first synchronization request meets a synchronization condition, the host sends first synchronization indication information to the storage device, to enable the storage device to synchronize, based on the first synchronization indication information, the second L2P mapping data and the second version number to the host.

The synchronization condition may be set based on an actual situation of the host. For example, when a current working status of the host meets the synchronization condition, it indicates that the first synchronization request meets the synchronization condition, and the storage device may be allowed to perform data synchronization.

In embodiments of this application, the host receives the first synchronization request sent by the storage device, where the first synchronization request is used to request to synchronize the second L2P mapping data and the second version number, where the first synchronization request is sent when the storage device determines that the third version number is different from the request version number currently stored in the storage device. In this way, the storage device may determine, based on whether the third version number is the same as the request version number, whether to allow synchronizing the second version number and the second L2P mapping data to the host, to prevent the storage device from reading incorrect data when processing the read request of the host due to version number wrapping. In addition, an in-transmit read request does not need to be reclaimed before the synchronization, and the L2P mapping data synchronization and read request delivery can be implemented in parallel, to effectively improve I/O performance of the storage device.

In some possible embodiments of the second aspect, the data synchronization method further includes the following step: The host sends a second read request to the storage device, where the second read request carries a version number of L2P mapping data stored in the host when the second read request is generated, and the second read request is sent by the host after the first read request, to enable the storage device to update the request version number to the version number carried in the second read request when the version number carried in the second read request is different from the version number carried in the first read request.

In embodiments of this application, the host may deliver the second read request based on a requirement of the host. When determining that the version number carried in the second read request is different from the version number carried in the first read request (that is, the latest request version number currently stored in the storage device), the storage device updates the request version number to the version number carried in the second read request, to ensure that the version number recorded by the storage device is the version number carried in the read request that is most recently received from the host.

In some possible embodiments of the second aspect, the data synchronization method further includes the following step: The host receives a second synchronization request sent by the storage device, where the second synchronization request is used to request to synchronize to-be-synchronized data, and the second synchronization request is sent when the storage device determines that the updated request version number is different from the third version number and the storage device has the to-be-synchronized data, where the to-be-synchronized data is data to be synchronized to the host, and the storage device determines the second L2P mapping data and the second version number as the to-be-synchronized data when determining that the third version number is the same as the request version number before the updating. When the second synchronization request meets the synchronization condition, the host sends second synchronization indication information to the storage device, to enable the storage device to synchronize the to-be-synchronized data to the host based on the second synchronization indication information.

In embodiments of this application, when the updated request version number is different from the third version number, and there is the to-be-synchronized data, the storage device sends the second synchronization request to the host to request to synchronize the to-be-synchronized data. When the second synchronization request meets the synchronization condition, the host sends the second synchronization indication information to the storage device. In this way, the storage device may synchronize the to-be-synchronized data to the host based on the second synchronization indication information.

In some possible embodiments of the second aspect, a quantity of the plurality of version numbers is Y, and the Y version numbers are determined by N bits of data, where N is an integer greater than or equal to 1, and Y is an integer less than or equal to 2^{N}.

In some possible embodiments of the second aspect, the data synchronization method further includes: receiving a host performance booster HPB table sent by the storage device in response to the first synchronization indication information, where the HPB table includes the second L2P mapping data and the second version number, an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table. Further, when M is less than the first difference, Q bits of the entry in the HPB table are used to store integrity check information of the entry, where Q is a difference between the first difference and M.

In some possible embodiments of the second aspect, the L2P mapping data is L2P mapping data corresponding to all or some of entries in the storage device.

According to a third aspect, this application further provides a storage device, where the storage device is used in a data storage system, and the data storage system further includes a host. The storage device includes: a determining module, configured to: when first L2P mapping data in the storage device changes, determine a second version number and a third version number based on a first version number and a version number sequence that correspond to the first L2P mapping data, where the version number sequence is a sequence of a plurality of cyclically arranged version numbers, the second version number is the 1^{st} version number after the first version number in the version number sequence, and the third version number is the 2^{nd} version number after the first version number in the version number sequence; a request module, configured to: when the third version number is different from a request version number currently stored in the storage device, determine the second version number as a version number of second L2P mapping data, and send a first synchronization request to the host, where the first synchronization request is used to request to synchronize the second L2P mapping data and the second version number to the host, the second L2P mapping data is changed first L2P mapping data, the request version number is a version number carried in a first read request that is most currently received by the storage device from the host, and the request version number is a version number of L2P mapping data stored in the host when the first read request is generated; and a processing module, configured to: when the third version number is the same as the request version number, determine the second version number as the version number of the second L2P mapping data, and use the second L2P mapping data and the second version number as to-be-synchronized data, where the to-be-synchronized data is data to be synchronized to the host.

In some possible embodiments of the third aspect, the storage device further includes: a receiving module, configured to receive a second read request from the host, where the second read request carries a version number of L2P mapping data stored in the host when the second read request is generated, and the second read request is received by the storage device after the first read request; and an update module, configured to: when the version number carried in the second read request is different from the version number carried in the first read request, update the request version number to the version number carried in the second read request.

In some possible embodiments of the third aspect, the request module is further configured to: when the updated request version number is different from the third version number, and the storage device has the to-be-synchronized data, send a second synchronization request to the host, where the second synchronization request is used to request to synchronize the to-be-synchronized data to the host.

In some possible embodiments of the third aspect, a quantity of the plurality of version numbers is Y, and the Y version numbers are determined by N bits of data, where N is an integer greater than or equal to 1, and Y is an integer less than or equal to 2^{N}.

In some possible embodiments of the third aspect, in the aspect of synchronizing the second L2P mapping data and the second version number to the host, the storage device further includes: a sending module, configured to send a host performance booster HPB table to the host, where the HPB table includes the second L2P mapping data and the second version number, an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table. Further, when M is less than the first difference, Q bits of the entry in the HPB table are used to store integrity check information of the entry, where Q is a difference between the first difference and M.

In some possible embodiments of the third aspect, the update module is further configured to: when the third version number is the same as the request version number, and the second L2P mapping data changes, update the second L2P mapping data to third L2P mapping data, where the third L2P mapping data is changed second L2P mapping data.

In some possible embodiments of the third aspect, the L2P mapping data is all or some of L2P mapping data in the storage device.

According to a fourth aspect, this application further provides a host, where the host is used in a data storage system, and the data storage system further includes a storage device. The host includes: a receiving module, configured to: receive a first synchronization request sent by the storage device, where the first synchronization request is used to request to synchronize second L2P mapping data and a second version number, where the first synchronization request is sent when the storage device determines that a third version number is different from a request version number currently stored in the storage device; the second version number and the third version number are determined, based on a first version number and a version number sequence that correspond to first L2P mapping data, when the storage device determines that the first L2P mapping data changes, the version number sequence is a sequence of a plurality of cyclically arranged version numbers, the second version number is the 1^{st} version number after the first version number in the version number sequence, and the third version number is the 2^{nd} version number after the first version number in the version number sequence; and the second L2P mapping data is changed first L2P mapping data, the request version number is a version number carried in a first read request that is most currently received by the storage device from the host, and the request version number is a version number of L2P mapping data stored in the host when the first read request is generated; and a sending module, configured to: when the first synchronization request meets a synchronization condition, send first synchronization indication information to the storage device, to enable the storage device to synchronize, based on the first synchronization indication information, the second L2P mapping data and the second version number to the host.

In some possible embodiments of the fourth aspect, the sending module is further configured to send a second read request to the storage device, where the second read request carries a version number of L2P mapping data stored in the host when the second read request is generated, and the second read request is sent by the host after the first read request, to enable the storage device to update the request version number to the version number carried in the second read request when the version number carried in the second read request is different from the version number carried in the first read request.

In some possible embodiments of the fourth aspect, the receiving module is further configured to receive a second synchronization request sent by the storage device, where the second synchronization request is used to request to synchronize to-be-synchronized data, and the second synchronization request is sent when the storage device determines that the updated request version number is different from the third version number and the storage device has the to-be-synchronized data, where the to-be-synchronized data is data to be synchronized to the host, and the storage device determines the second L2P mapping data and the second version number as the to-be-synchronized data when determining that the third version number is the same as the request version number before the updating. The sending module is further configured to: when the second synchronization request meets the synchronization condition, send second synchronization indication information to the storage device, to enable the storage device to synchronize the to-be-synchronized data to the host based on the second synchronization indication information.

In some possible embodiments of the fourth aspect, a quantity of the plurality of version numbers is Y, and the Y version numbers are determined by N bits of data, where N is an integer greater than or equal to 1, and Y is an integer less than or equal to 2^{N}.

In some possible embodiments of the fourth aspect, the receiving module is further configured to receive a host performance booster HPB table sent by the storage device in response to the first synchronization indication information, where the HPB table includes the second L2P mapping data and the second version number, an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table. Further, when M is less than the first difference, Q bits of the entry in the HPB table are used to store integrity check information of the entry, where Q is a difference between the first difference and M.

In some possible embodiments of the fourth aspect, the L2P mapping data is all or some of L2P mapping data in the storage device.

According to a fifth aspect, this application further provides a data processing device, including a processor and a memory, where the processor is connected to the memory, the memory is configured to store program code, and the processor is configured to invoke the program code to perform the data synchronization method according to the first aspect, or perform the data synchronization method according to the second aspect.

According to a sixth aspect, this application further provides a computer storage medium, where the computer storage medium stores a computer program, the computer program includes program instructions, and when the program instructions are executed by a processor, the data synchronization method according to the first aspect is performed, or the data synchronization method according to the second aspect is performed.

According to a seventh aspect, a computer program product including instructions is further provided. When the computer program product runs on a computer, the computer is enabled to perform the data synchronization method according to the first aspect, or perform the data synchronization method according to the second aspect.

For beneficial effects of some implementations of the technical solutions provided in the third aspect to the seventh aspect of this application, refer to beneficial effects of the technical solutions in the first aspect and the second aspect. Details are not described herein again.

### BRIEF DESCRIPTION OF DRAWINGS

To describe the technical solutions in embodiments of this application more clearly, the following briefly describes the accompanying drawings for describing embodiments. It is clear that the accompanying drawings in the following descriptions show some embodiments of this application, and a person of ordinary skill in the art may still derive other drawings from these accompanying drawings without creative efforts.
FIG. 1 is a schematic diagram of an example of a data storage system according to an embodiment of this application;
FIG. 2 is a schematic diagram of a structure of a data storage system according to an embodiment of this application;
FIG. 3 is a schematic flowchart of a data synchronization method according to an embodiment of this application;
FIG. 4a is a specific schematic flowchart of a data synchronization method according to an embodiment of this application;
FIG. 4b is a specific schematic flowchart of a data synchronization method according to an embodiment of this application;
FIG. 5 is a schematic diagram of an entry division manner according to an embodiment of this application;
FIG. 6 is a schematic diagram of a structure of a storage device according to an embodiment of this application;
FIG. 7 is a schematic diagram of a structure of a host according to an embodiment of this application; and
FIG. 8 is a schematic diagram of a structure of a data processing device according to an embodiment of this application.

### DESCRIPTION OF EMBODIMENTS

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

For ease of understanding, some concepts related to embodiments of this application are described for reference by using examples below. Details are as follows.

Information is stored in a memory in a unit of byte. To correctly store or obtain information, each byte unit is assigned a unique memory address, which is referred to as a physical address (Physical Address), also referred to as an actual address or an absolute address.

A logical address refers to an address of a memory cell (Memory Cell), a storage element (Storage Element), or a network host (Network Host) in a computer architecture from the perspective of an application program. The logical address is usually different from the physical address (Physical Address). The logical address can be converted into the physical address by using an address translator (Address Translator) or a mapping function.

L2P (Logical To Physical, logical address to physical address) mapping data stores address information of user data. Expected data can be accurately found only by using the L2P mapping data. A L2P table is also referred to as an FTL (Flash Translation Layer) mapping table, and is a sequence table in which an LBA (Logical Block Address, logical block address) is used as an index, a PBA (Physical Block Address, physical block address) is used as a content element, and a mapping relationship between the LBA and the PBA is recorded. The physical address and the logical address are in one-to-one correspondence.

A static random access memory (Static Random Access Memory, SRAM) is a semiconductor memory that is based on a flip-flop logic circuit. Provided that a power supply is not removed, information written into the static random access memory does not disappear, and the circuit does not need to be refreshed. The stored information is not damaged when being read. Once the information is written, it can be read for a plurality of times.

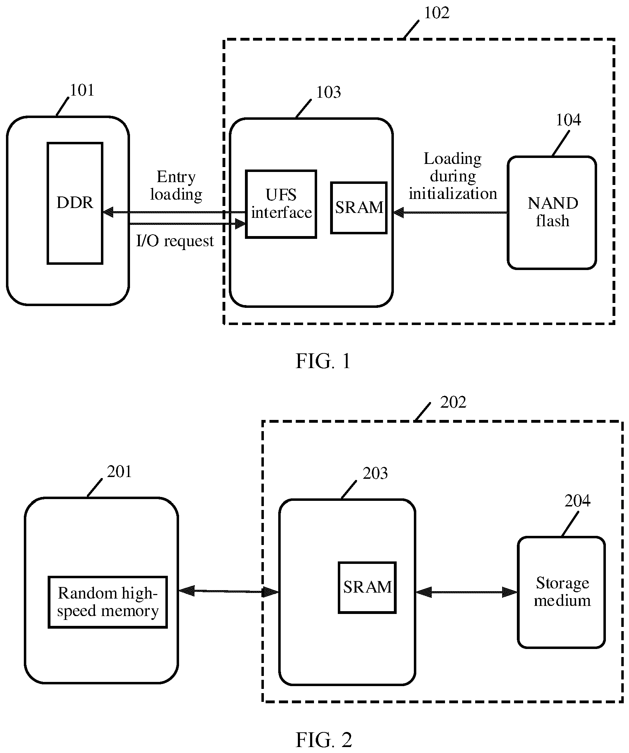

Currently, FIG. 1 shows a structure of a data storage system. The data storage system includes a host (Host) 101 and a storage device 102. The host 101 includes a DDR. The storage device 102 includes a storage controller 103 and a NAND flash 104. The storage controller 103 includes a universal flash storage (Universal Flash Storage) UPS interface and an SRAM. The storage device 102 has a set of L2P mapping data, and the L2P mapping data needs to be loaded into the internal SRAM of the storage controller 103 when the storage device 102 is initialized. The larger a storage capacity of the storage device is, the larger a capacity of the SRAM is needed to store the L2P mapping data. Because an increase in the capacity of the SRAM significantly affects manufacturing costs and power consumption of the storage device, in a low-cost or low-power storage device, only a part of L2P mapping data is loaded into the SRAM of the storage controller, and other L2P mapping data is stored in the NAND flash. Because the part of L2P information stored in the NAND flash is not loaded into the SRAM of the storage controller, when the storage device 102 has I/O access of the host, and data cannot be hit by using the L2P mapping data cached in the SRAM of the storage controller, the remaining L2P mapping data needs to be loaded from the NAND flash to the SRAM first, to perform I/O read/write, and this causes serious deterioration of I/O performance of the storage device.

For the foregoing problem, an existing method is to use the DDR in the host to cache the L2P mapping data, so as to increase a size of the L2P mapping data in a cache. However, the L2P mapping data may change with an I/O write request of the host in the foreground and an operation (such as garbage collection) of the storage device in the background. Because an entry is cached in the host in advance, after an entry of the L2P mapping data in the storage device changes, the entry cached in the host is inconsistent with the entry in the storage device. Entry inconsistency needs to be detected to prevent misuse, to prevent the host from reading incorrect data. In the existing method, a bit bitmap indicates whether the L2P mapping data is modified. However, because L2P mapping data update and I/O request delivery are performed in parallel, there is an in-transmit I/O request before the storage device completes the L2P mapping data synchronization. Entries carried in the in-transmit I/O requests are I/O requests delivered before the synchronization. As a result, I/O requests received by the storage device are still entries before the updating, and the storage device misuses the entries before the updating and reads incorrect data.

Therefore, to resolve a problem of entry misuse that is caused because the entry update and the I/O request delivery are performed in parallel, before each time of entry synchronization, the storage device indicates the host to clear all the in-transmit I/O requests. However, in the method, the host needs to wait for all delivered I/O requests to return to the host. In a process of waiting for the I/O requests to return to the host, the host cannot deliver a new I/O request. Consequently, the I/O performance of the storage device cannot meet a requirement.

For the foregoing technical problem, this application provides a data synchronization method applied to a data storage system, so that the L2P mapping data synchronization and the read request delivery can be implemented in parallel, the in-transmit read request does not need to be reclaimed before the synchronization, and the I/O performance of the storage device can be effectively improved.

In embodiments of this application, FIG. 2 is a schematic diagram of a structure of a data storage system according to an embodiment of this application. The data storage system includes a host 201 and a storage device 202.

The host 201 may include any computing device known in a conventional technology, for example, a server, a desktop computer, a tablet computer, a personal computer, a handheld computer, or a personal digital assistant.

The storage device 202 may include at least one storage medium 204 and at least one storage controller 203. The storage medium 204 is a storage medium having L2P mapping data, for example, a NAND flash. The storage controller 203 is configured to: perform storage scheduling on data in the storage medium, and maintain a device such as the storage medium 204. Generally, the storage controller 203 includes a static random access memory (Static Random Access Memory, SRAM), configured to cache a part of the L2P mapping data of the storage device 202. The storage device in this embodiment needs to perform L2P conversion once when accessing the storage medium.

In addition, because the SRAM inside the storage controller 203 is insufficient to store all the L2P mapping data, storage space of the host may be borrowed to store all or some of the L2P mapping data. Specifically, the host 201 includes a random high-speed memory (for example, a DDR), and the random high-speed memory is configured to cache a part or all of the L2P mapping data of the storage device 202.

In this embodiment of this application, the storage device may be built in the host, or may be an independent storage device. This is not specifically limited in this application.

The following specifically describes a data synchronization method applied to the storage device.

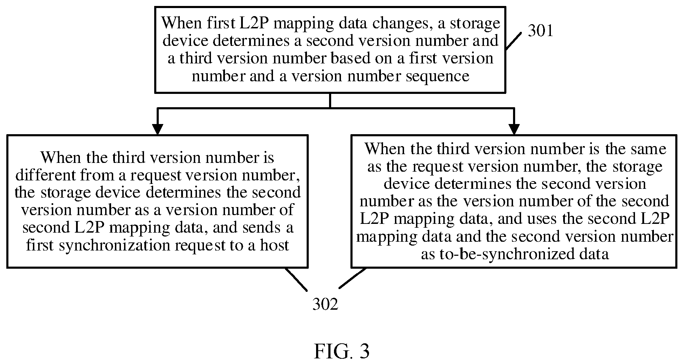

FIG. 3 is a schematic flowchart of a data synchronization method according to an embodiment of this application. The data synchronization method includes the following steps.

Step 301: When first L2P mapping data in a storage device changes, the storage device determines a second version number and a third version number based on a first version number and a version number sequence that correspond to the first L2P mapping data, where the version number sequence is a sequence of a plurality of cyclically arranged version numbers, the second version number is the 1^{st} version number after the first version number in the version number sequence, and the third version number is the 2^{nd} version number after the first version number in the version number sequence.

Specifically, in this embodiment, one version of L2P mapping data in the storage device corresponds to one version number. If version numbers of two pieces of L2P mapping data are different, it indicates that the two pieces of L2P mapping data are different. A quantity of the plurality of version numbers is Y, and each of the Y version numbers is determined by N bits of data, where N is an integer greater than or equal to 1, and Y is an integer less than or equal to 2^{N}. For example, N is 2. In this case, version numbers determined by two bits of data are 0, 1, 2, and 3. In this case, Y may be 2, 3, or 4. When Y is 2, any two version numbers may be selected from 0, 1, 2, and 3, for example, 0 and 1, 0 and 2, 0 and 3, and 1 and 2, to serve as version numbers of L2P mapping data in the storage device. Similarly, when Y is 4, four version numbers 0, 1, 2, and 3 are used as version numbers of L2P mapping data in the storage device. After the Y version numbers are selected, the Y version numbers are cyclically arranged to obtain a version number sequence. The Y version numbers may be arranged according to a preset sorting rule, and then the arranged Y version numbers are cycled, to obtain the version number sequence.

The preset sorting rule may be set based on an actual situation, and is not specifically limited. For example, the preset sorting rule is to sort the version numbers in ascending order, or sort the version numbers in descending order, or randomly traverse the version numbers. For example, assuming that the four version numbers 0, 1, 2, and 3 are the version numbers of the L2P mapping data in the storage device, in ascending order, a version number sequence is 0-1-2-3-0-1-2-3-0-1.... For another example, assuming that the Y version numbers are 1, 2, 3, 4, and 5, and a plurality of version numbers obtained through traversal according to a search path are 3, 1, 5, 4, and 2, a version number sequence is 3-1-5-4-2-3-1-5-4-2-3-....

It should be noted that, in this embodiment of this application, two different version numbers are allocated to L2P mapping data in the storage device before and after the changing based on a version number sequence. For example, a first sequence is 1, 2, and 3, and an initial version number of the L2P mapping data is 1. When the L2P mapping data changes, a version number corresponding to changed L2P mapping data is 2. When the L2P mapping data whose version number is 2 re-changes, a version number corresponding to re-changed L2P mapping data is 3.

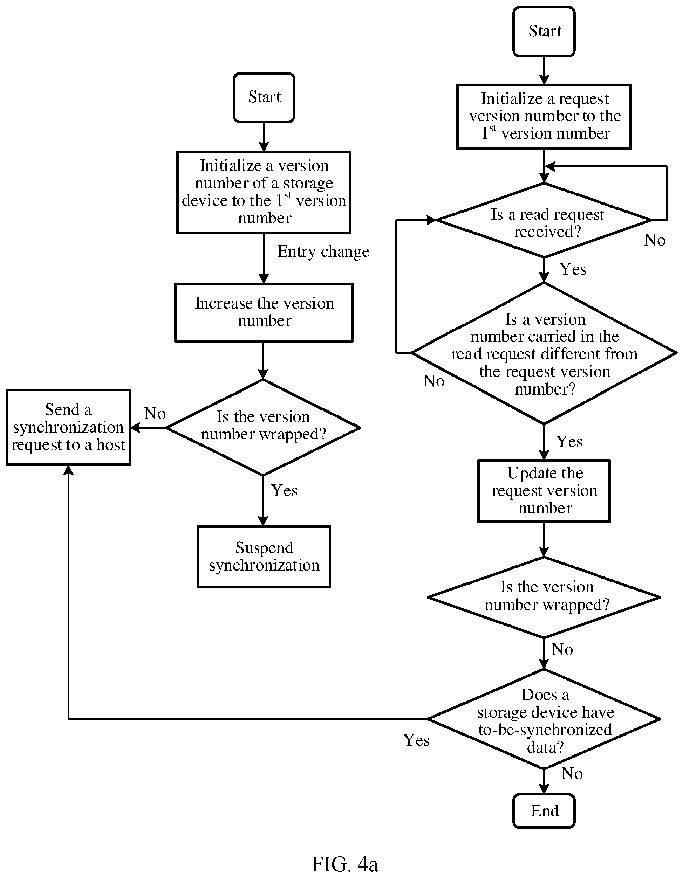

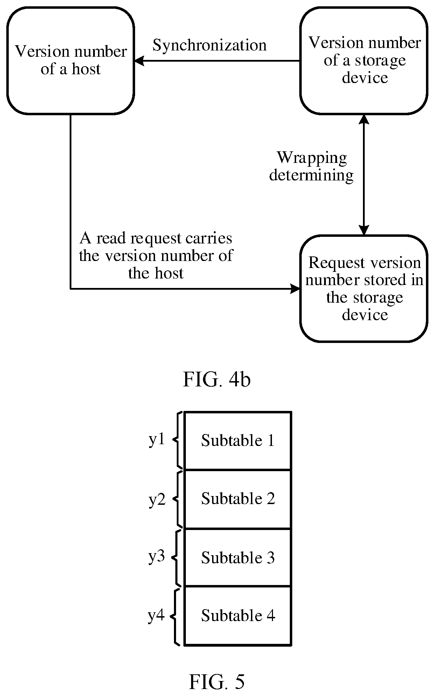

Therefore, in this embodiment of this application, when it is determined that the first L2P mapping data in the storage device changes, the second version number and the third version number are determined based on the first version number and the version number sequence that correspond to the first L2P mapping data, where the second version number is the 1^{st} version number after the first version number in the version number sequence, and the third version number is the 2^{nd} version number after the first version number in the version number sequence. For example, if the version number sequence is 0-1-2-3-0-1-2-3-0-1..., and the first version number is 1, the second version number is 2, and the third version number is 3. Actually, refer to FIG. 2, FIG. 4a, and FIG. 4b. FIG. 4a is a specific schematic flowchart of a data synchronization method according to an embodiment of this application. FIG. 4b is a specific schematic flowchart of a data synchronization method according to an embodiment of this application. First, after the storage device is powered on and initialized, a version number of L2P mapping data (that is, a version number of the storage device, that is, a version number corresponding to L2P mapping data currently stored in the storage device, where when the storage device stores the first L2P mapping data, the version number of the storage device is the first version number, when the storage device stores the second L2P mapping data, the version number of the storage device is the second version number, or the like) and a request version number stored in the storage device are both initialized to the 1^{st} version number in the version number sequence. Assuming that the version number sequence is 0-1-2-3-0-1-2-3-0-1..., both the version number of the storage device and the request version number are 0 at the beginning. When the L2P mapping data in the storage device changes (at least one entry changes), an increased version number is first determined ("increase" herein should be understood as that the version number changes based on the version number sequence). In this case, it may be determined, based on the version number sequence, that the increased version number is 1, that is, the second version number, and the third version number is 2.

Step 302: When the third version number is different from the request version number currently stored in the storage device, the storage device determines the second version number as a version number of second L2P mapping data, and sends a first synchronization request to the host, where the first synchronization request is used to request to synchronize the second L2P mapping data and the second version number to the host, the second L2P mapping data is changed first L2P mapping data, the request version number is a version number carried in a first read request that is most currently received by the storage device from the host, and the request version number is a version number of L2P mapping data stored in the host when the first read request is generated. When the third version number is the same as the request version number, the storage device determines the second version number as the version number of the second L2P mapping data, and uses the second L2P mapping data and the second version number as to-be-synchronized data, where the to-be-synchronized data is data to be synchronized to the host, that is, data to be synchronized to the host next time.

Correspondingly, the host receives the first synchronization request sent by the storage device. In addition, when the first synchronization request meets a synchronization condition, the host sends first synchronization indication information to the storage device, to enable the storage device to synchronize, based on the first synchronization indication information, the second L2P mapping data and the second version number to the host. When the first synchronization request does not meet the synchronization condition, the host does not respond to the first synchronization request.

The storage device stores the request version number, where the request version number is the version number carried in the first read request that is most currently received by the storage device from the host. Refer to FIG. 2, FIG. 4a, and FIG. 4b. When the increased version number, that is, the second version number is 1, and the third version number is 2, 2 is compared with the currently stored request version number 0 to determine whether version number wrapping may occur. In this case, 2 is different from 0, indicating that the version number wrapping does not occur. The increased version number 1 is used as the version number of the changed L2P mapping data. In addition, the storage device is allowed to synchronize the changed L2P mapping data and the increased version number to the host, and the storage device sends the synchronization request to the host to request to synchronize the changed L2P mapping data and the increased version number to the host. On the contrary, assuming that an original version number is 2, the second version number is 3, the third version number is 0, and the request version number is still 0, it is determined that version number wrapping may occur. In this case, the version number of the modified L2P mapping data is determined as the version number 3, and the synchronization needs to be suspended, that is, the modified L2P mapping data and the second version number are used as the data to be synchronized.

In this embodiment of this application, before the second L2P mapping data and the second version number are synchronized to the host, whether the third version number is the same as the request version number currently stored in the storage device needs to be verified. When the foregoing two version numbers are the same, it is determined that the version number may be "wrapped", and the second L2P mapping data and the second version number may not be synchronized to the host. The synchronization needs to be suspended to ensure that the storage device can determine that the L2P mapping data is different based on different version numbers. This avoids a case in which, after the second L2P mapping data and the second version number are synchronized to the host, because the L2P mapping data in the storage device continues changing and a version number of changed L2P mapping data is the third version number, version number wrapping really occurs, and the storage device reads incorrect data when processing a read request of the host, and uses the second L2P mapping data and the second version number as the to-be-synchronized data. When the third version number is different from the current request version number, the second version number is determined as the version number of the second L2P mapping data, and the storage device sends the first synchronization request to the host to request to synchronize the second L2P mapping data and the second version number to the host. Correspondingly, when determining that the first synchronization request meets a synchronization condition, the host sends the first synchronization indication information to the storage device, to enable the storage device to synchronize, based on the first synchronization indication information, the second L2P mapping data and the second version number to the host. In this version number update mechanism, a problem of the version number wrapping is resolved by delaying the synchronization to the host, so that the L2P mapping data synchronization and the read request delivery can be performed in parallel.

In conclusion, according to the data synchronization method in embodiments of this application, whether the second version number and the second L2P mapping data are allowed to be synchronized to the host is determined by determining whether the third version number is the same as the request version number, to ensure that the storage device can determine whether the L2P mapping data is the same by determining whether a version number of local L2P mapping data is the same as a version number carried in an I/O read request. In addition, according to the data synchronization method in embodiments of this application, an in-transmit read request does not need to be reclaimed before the L2P mapping data is synchronized. Therefore, the L2P mapping data synchronization and read request delivery can be implemented in parallel, to effectively improve I/O performance of the storage device.

It should be noted that, when the host does not respond to the first synchronization request of the storage device, but the second L2P mapping data changes, because the second version number is not synchronized to the host, to save the version number, a version number of changed second L2P mapping data may be the second version number. Alternatively, a version number may continue to change with L2P mapping data, that is, a version number of changed second L2P mapping data may be the third version number.

In some possible embodiments, in step 301, a method for determining that the first L2P mapping data in the storage device changes includes: determining whether the storage device receives a write request from the host (where the write request is used to write data to a storage medium of the storage device), or determining whether a data migration operation (for example, a garbage collection operation, or a data migration operation performed when a reliability indicator of the storage medium meets a specific condition) is performed on the storage device. Garbage collection is an automatic storage management mechanism. When some occupied memory is no longer needed, it should be released to release space. The storage resource management is referred to as garbage collection (Garbage Collection). When the write request from the host is received or the data migration operation is performed by the storage device, it may be determined that the L2P mapping data in the storage device changes.

In some possible embodiments, the foregoing synchronization condition may be set based on an actual situation of the host. For example, when the first synchronization request is received and it is determined that a current working status of the host meets the synchronization condition, it indicates that the first synchronization request meets the synchronization condition, and the storage device may be allowed to perform data synchronization. For example, when the synchronization condition is that an I/O processing stress indicator of the host does not meet a stress condition, it indicates that the working status of the host meets the synchronization condition, the host is not busy, and is capable of completing a data synchronization operation with the storage device. The I/O processing stress indicator may be a quantity of I/O requests (read requests and/or write requests) sent by the host, CPU usage of an I/O operation, or the like. When the quantity of the I/O requests is less than a quantity threshold, or the CPU usage of the I/O operation is less than a usage threshold, it indicates that the working status of the host meets the synchronization condition.

In some possible embodiments, a specific manner in which the storage device synchronizes the L2P mapping data and the corresponding version number to the host may be: The host grants permission on a part of storage space of a random access memory of the host to the storage device, so that the storage device may synchronize the L2P mapping data and the corresponding version number to the host, for example, synchronize the second L2P mapping data and the second version number to the host.

In some possible embodiments, that the storage device synchronizes the L2P mapping data and the corresponding version number (for example, the second L2P mapping data and the second version number) to the host specifically includes the following step: The storage device sends a host performance booster (Host-Aware Performance Booster, HPB) table to the host, where the HPB table includes the L2P mapping data and the corresponding version number, and an HPB technology is a technology that uses performance of a host memory acceleration component in a UFS protocol. An index of an entry in the HPB table is a logical address in L2P mapping data, N bits of the entry in the HPB table are used to store a version number corresponding to the L2P mapping data (which may also be understood as a version number corresponding to the entry), and M bits of the entry in the HPB table are used to store a physical address in the L2P mapping data, where M is less than or equal to a first difference, the first difference is a difference between X and N, that is, X-N, and X is a total quantity of bits of the entry in the HPB table. When M is equal to the first difference, it indicates that entry information of the HPB table includes the physical address and the version number (where the index of the entry is the logical address corresponding to the physical address). Further, when M is less than the first difference, Q bits of the entry in the HPB table are used to store integrity check information of the entry, where Q is a difference between the first difference and M, that is, X-N-M.

For example, refer to FIG. 4b. When synchronizing the L2P mapping data and the corresponding version number to the host, the storage device first extracts the L2P mapping data stored in the storage device, obtains the version number that is of the storage device and that is currently stored in the storage device, generates an HPB table based on the L2P mapping data and the version number, and then synchronizes the HPB table to the host.

In embodiments of this application, the existing HPB table is used to synchronize the L2P mapping data and the version number, and this can effectively save the development cost of a data synchronization protocol between the host and the storage device. It should be noted that, in embodiments of this application, another existing type table or a customized table may be used to synchronize the L2P mapping data and the version number. This is not specially limited.

Specifically, refer to Table 1. Table 1 shows an entry structure of an HPB table, where a reserved field may be used to store information such as integrity check information of the entry, or may be empty and no information is stored. In this embodiment, a quantity of bits of the reserved field may be 0, or may be at least one. It should be noted that, the entry structure of the HPB table is not limited to the structure shown in Table 1, and a type of a field in the entry and an arrangement sequence of the field may be modified based on an actual situation.

**Table 1 Entry structure of an HPB table**

| | | |
|---|---|---|
| Version number | Reserved field | Physical address |

Specifically, an entry of the existing HPB table includes a physical address and a reserved field. In this embodiment of this application, some bits in the reserved field are allocated to indicate a version number of the HPB entry. Because the version number of the entry also needs to be stored in the storage device, SRAM space is occupied. To reduce the occupation of the SRAM space, in this embodiment, only some bits other than the physical address in the HPB entry are used to represent the version number of the entry. It is assumed that in the HPB entry, the physical address is 32 bits, the reserved field is 32 bits, and two bits in the reserved field are used to store the version number. There may be four version numbers: 0 (00), 1 (01), 2 (10), and 3 (11), and the version numbers are cyclically used. For example, the version number returns to 0 after 3.

In some possible embodiments, the data synchronization method further includes the following step.

When the third version number is the same as the request version number, and the second L2P mapping data changes, the storage device updates the second L2P mapping data to third L2P mapping data, where the third L2P mapping data is changed second L2P mapping data.

In embodiments of this application, when the version number is wrapped and the second L2P mapping data changes, the storage device determines a version number of changed second L2P mapping data (that is, the third L2P mapping data) as the second version number. In this case, the to-be-synchronized data is the third L2P mapping data and the second version number. Simply, when the version number is wrapped and the L2P mapping data changes, the storage device still determines the version number of the changed L2P mapping data as the second version number, and updates the updated L2P mapping data to the to-be-synchronized data. In other words, in a period of determining that version number wrapping occurs, an L2P mapping data change caused by an entry change of the storage device is not synchronized to the host, and a version number before the version number wrapping is kept as a version number of changed L2P mapping data, to ensure that the version number of the changed L2P mapping data is absolutely inconsistent with a version number that has been synchronized to the host.

In some possible embodiments, the data synchronization method further includes the following steps.

S1: The storage device receives a second read request from the host, where the second read request carries a version number of L2P mapping data stored in the host when the second read request is generated, and the second read request is received by the storage device after the first read request.

Correspondingly, the host sends the second read request to the storage device, where the second read request carries the version number of the L2P mapping data stored in the host when the second read request is generated, and the second read request is sent by the host after the first read request.

Specifically, refer to FIG. 4a. A process of synchronizing the L2P mapping data is parallel to a process of delivering the read request by the host. In embodiments of this application, the host may deliver the second read request based on a requirement of the host, where the second read request carries the version number of the L2P mapping data stored in the host when the second read request is generated.

S2: When the version number carried in the second read request is different from the version number carried in the first read request, the storage device updates the request version number to the version number carried in the second read request.

Specifically, refer to FIG. 4a and FIG. 4b. When the storage device determines that a read request, for example, the second read request, delivered by the host is received (where a version number of the host that is carried in the read request is a version number corresponding to L2P mapping data currently stored in the host when the read request is delivered), and the storage device determines that the version number carried in the second read request is different from the version number carried in the first read request (that is, a latest request version number currently stored in the storage device), the storage device updates the request version number to the version number carried in the second read request, to ensure that the version number recorded by the storage device is the version number carried in the read request that is most recently received from the host. On the contrary, when the version number carried in the second read request is the same as the version number carried in the first read request, the storage device does not update the request version number, and goes back to detect whether the read request from the host is received.

It should be noted that a read request such as the first read request or the second read request delivered by the host carries an HPB entry corresponding to data that the host wants to read. After receiving the read request, the storage device checks information integrity of the HPB entry based on integrity check information in the HPB entry. For example, cyclic redundancy check (Cyclic Redundancy Check, CRC) is performed. The CRC is a channel coding technology that generates a short check code with fixed bits based on data such as network data packets or computer files, and is mainly used to detect or check an error that may occur during data transmission or after data storage. The CRC performs error detection according to a division and remainder principle. Polynomial calculation is performed on the data, and an obtained result is attached to a frame. The receiving device also performs a similar algorithm, to ensure correctness and integrity of the data transmission.

In some possible embodiments, the data synchronization method further includes the following step.

S3: When the updated request version number is different from the third version number, and the storage device has the to-be-synchronized data, the storage device sends a second synchronization request to the host, where the second synchronization request is used to request to synchronize the to-be-synchronized data to the host.

Correspondingly, the host receives the second synchronization request sent by the storage device. When the second synchronization request meets the synchronization condition, the host sends second synchronization indication information to the storage device, so that the storage device synchronizes the to-be-synchronized data to the host based on the second synchronization indication information.

In embodiments of this application, when the synchronization is suspended, the version number wrapping can be canceled only after the request version number is updated. After it is determined that the version number is to be wrapped, after a new read request from the host is received and the request version number is updated, the updated request version number is different from the third version number. In this case, the version number wrapping is canceled. When the wrapping is canceled and the storage device has the to-be-synchronized data, the storage device sends the second synchronization request to the host to request to synchronize the to-be-synchronized data to the host.

Refer to FIG. 4a and FIG. 4b. If a version number is modified and synchronized to the host each time an entry is modified, because a quantity of version numbers is limited, version number wrapping occurs. To resolve a problem of the version number wrapping, when the version number wrapping occurs and the synchronization is suspended, a previous version number can be reused only after a new request version number is received. In an example of version numbers 0, 1, 2, and 3, it is assumed that a current request version number is 0, and after the version number of the storage device increases to 3 (that is, the second version number is 3), because a next version number (that is, the third version number) is 0 and is the same as the current request version number, version number wrapping occurs. An entry of the version number 3 can be synchronized to the host only after a read request of a new request version number (for example, 1, 2, or 3, where because the host does not always deliver a read request, a version number of the host may be overwritten. For example, a current request version number is 0, an original version number of the host is 1, and a read request is not delivered. After the version number of the host changes from 1 to 2, the host delivers an I/O read request when the version number is 2. In this case, an I/O read request with the version number 1 does not exist. That is, the request version number directly changes from 0 to 2) is received. Then, the version number of the storage device is increased and wrapped to 0. During the synchronization suspension, the entry changes on the storage device are not synchronized to the host and the version number 3 is kept, to ensure that the version number of the modified entry is absolutely inconsistent with a version number that has been synchronized to the host.

In some possible embodiments, the L2P mapping data (such as the first L2P mapping data and the second L2P mapping data) in any one of the foregoing embodiments may be L2P mapping data corresponding to all or some of entries in the storage device. Simply, a plurality of L2P mapping data entry sets may be obtained by dividing all L2P mapping data entries in the storage device, and may be understood as a plurality of subtables. That is, entire entry space is divided into m subtables. Each subtable has a storage device version number and a latest version number carried in a corresponding I/O delivery request, and does not affect each other. Simply, each subtable is processed according to the data synchronization method shown in any embodiment of this application. A quantity range of the subtables is 0≤m≤a total quantity of entries of the storage device, and quantities of entries in each subtable may be the same or may be different. There may be a plurality of entry division manners, but any division manner can be used to divide entry distribution in the L2P table, to achieve an objective of performing L2P table division based on the entry distribution. The specific division manner is described below.

Assuming that the L2P mapping data corresponding to all the entries in the storage device is used as the L2P mapping data described in any embodiment of this application, version number wrapping quickly occurs. Therefore, region division is performed on the L2P mapping data of the storage device, and each subtable obtained through the region division correspondingly changes based on a version number sequence, so that the occurrence of the version number wrapping can be effectively delayed.

For example, the entry division manner is a sequential division manner. A quantity m of tables obtained through division is preset first, a quantity of entries of each table is determined, and then the division is performed sequentially based on an entry sequence. As shown in FIG. 5, assuming that m is 4, and quantities of entries of each table are y1, y2, y3, and y4, a table 1, a table 2, a table 3, and a table 4 may be obtained through sequential division.

It should be noted that step numbers in any one of the foregoing embodiments are merely used to distinguish between different method steps, and do not limit an execution sequence of the method steps.

The foregoing content describes in detail the method in embodiments of this application. The following provides an apparatus in embodiments of this application.

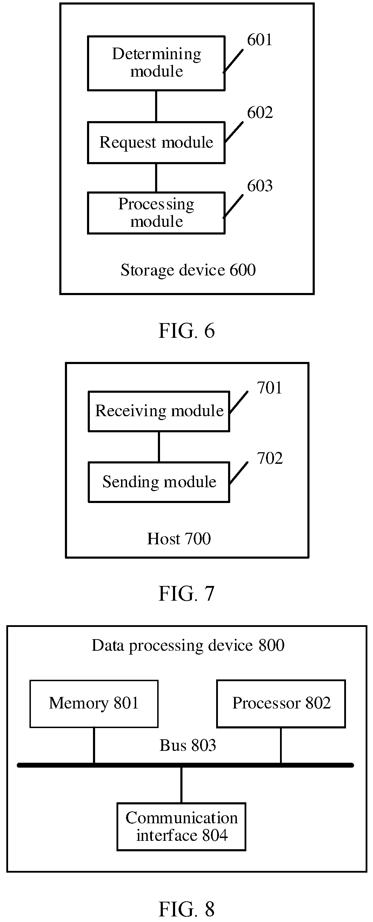

This application further provides a storage device. The storage device is used in a data storage system, and the data storage system further includes a host. FIG. 6 is a schematic diagram of a structure of a storage device according to an embodiment of this application. The storage device 600 includes a determining module 601, a request module 602, and a processing module 603.

The determining module 601 is configured to: when first L2P mapping data in the storage device changes, determine a second version number and a third version number based on a first version number and a version number sequence that correspond to the first L2P mapping data, where the version number sequence is a sequence of a plurality of cyclically arranged version numbers, the second version number is the 1^{st} version number after the first version number in the version number sequence, and the third version number is the 2^{nd} version number after the first version number in the version number sequence.

The request module 602 is configured to: when the third version number is different from a request version number currently stored in the storage device, determine the second version number as a version number of second L2P mapping data, and send a first synchronization request to the host, where the first synchronization request is used to request to synchronize the second L2P mapping data and the second version number to the host, the second L2P mapping data is changed first L2P mapping data, the request version number is a version number carried in a first read request that is most currently received by the storage device from the host, and the request version number is a version number of L2P mapping data stored in the host when the first read request is generated.

The processing module 603 is configured to: when the third version number is the same as the request version number, determine the second version number as the version number of the second L2P mapping data, and use the second L2P mapping data and the second version number as to-be-synchronized data, where the to-be-synchronized data is data to be synchronized to the host.

In some possible embodiments, the storage device 600 further includes:
a receiving module, configured to receive a second read request from the host, where the second read request carries a version number of L2P mapping data stored in the host when the second read request is generated, and the second read request is received by the storage device after the first read request; and
an update module, configured to: when the version number carried in the second read request is different from the version number carried in the first read request, update the request version number to the version number carried in the second read request.

In some possible embodiments, the request module 602 is further configured to: when the updated request version number is different from the third version number, and the storage device has the to-be-synchronized data, send a second synchronization request to the host, where the second synchronization request is used to request to synchronize the to-be-synchronized data to the host.

In some possible embodiments, a quantity of the plurality of version numbers is Y, and the Y version numbers are determined by N bits of data, where N is an integer greater than or equal to 1, and Y is an integer less than or equal to 2^{N}.

In some possible embodiments, in the aspect of synchronizing the second L2P mapping data and the second version number to the host, the storage device further includes:
a sending module, configured to send a host performance booster HPB table to the host, where the HPB table includes the second L2P mapping data and the second version number, an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table. Further, when M is less than the first difference, Q bits of the entry in the HPB table are used to store integrity check information of the entry, where Q is a difference between the first difference and M.

In some possible embodiments, the update module is further configured to: when the third version number is the same as the request version number, and the second L2P mapping data changes, update the second L2P mapping data to third L2P mapping data, where the third L2P mapping data is changed second L2P mapping data.

In some possible embodiments, the L2P mapping data is all or some of L2P mapping data in the storage device.

It should be noted that embodiments of the storage device 600 corresponds to the foregoing method embodiments. For specific descriptions and descriptions of beneficial effects, refer to the method embodiments. Details are not described again. It should be noted that, the apparatus embodiments may be used in cooperation with the foregoing methods, or may be separately used.

This application further provides a host. The host is used in a data storage system, and the data storage system further includes a storage device. FIG. 7 is a schematic diagram of a structure of a host according to an embodiment of this application. A host 700 includes a receiving module 701 and a sending module 702.

The receiving module 701 is configured to receive a first synchronization request sent by the storage device, where the first synchronization request is used to request to synchronize second L2P mapping data and a second version number, where the first synchronization request is sent when the storage device determines that a third version number is different from a request version number currently stored in the storage device; the second version number and the third version number are determined, based on a first version number and a version number sequence that correspond to first L2P mapping data, when the storage device determines that the first L2P mapping data changes, the version number sequence is a sequence of a plurality of cyclically arranged version numbers, the second version number is the 1^{st} version number after the first version number in the version number sequence, and the third version number is the 2^{nd} version number after the first version number in the version number sequence; and the second L2P mapping data is changed first L2P mapping data, the request version number is a version number carried in a first read request that is most currently received by the storage device from the host, and the request version number is a version number of L2P mapping data stored in the host when the first read request is generated.

The sending module 702 is configured to: when the first synchronization request meets a synchronization condition, send first synchronization indication information to the storage device, to enable the storage device to synchronize, based on the first synchronization indication information, the second L2P mapping data and the second version number to the host.

In some possible embodiments, the sending module 702 is further configured to send a second read request to the storage device, where the second read request carries a version number of L2P mapping data stored in the host when the second read request is generated, and the second read request is sent by the host after the first read request, to enable the storage device to update the request version number to the version number carried in the second read request when the version number carried in the second read request is different from the version number carried in the first read request.

In some possible embodiments, the receiving module 701 is further configured to receive a second synchronization request sent by the storage device, where the second synchronization request is used to request to synchronize to-be-synchronized data, and the second synchronization request is sent when the storage device determines that the updated request version number is different from the third version number and the storage device has the to-be-synchronized data, where the to-be-synchronized data is data to be synchronized to the host, and the storage device determines the second L2P mapping data and the second version number as the to-be-synchronized data when determining that the third version number is the same as the request version number before the updating.

The sending module 702 is further configured to: when the second synchronization request meets the synchronization condition, send second synchronization indication information to the storage device, to enable the storage device to synchronize the to-be-synchronized data to the host based on the second synchronization indication information.

In some possible embodiments, a quantity of the plurality of version numbers is Y, and the Y version numbers are determined by N bits of data, where N is an integer greater than or equal to 1, and Y is an integer less than or equal to 2^{N}.

In some possible embodiments, the receiving module is further configured to receive a host performance booster HPB table sent by the storage device in response to the first synchronization indication information, where the HPB table includes the second L2P mapping data and the second version number, an index of an entry in the HPB table is a logical address in the second L2P mapping data, N bits of the entry in the HPB table are used to store the second version number, and M bits of the entry in the HPB table are used to store a physical address in the second L2P mapping data, where M is less than or equal to a first difference, the first difference is a difference between X and N, and X is a total quantity of bits of the entry in the HPB table. Further, when M is less than the first difference, Q bits of the entry in the HPB table are used to store integrity check information of the entry, where Q is a difference between the first difference and M.

In some possible embodiments, the L2P mapping data is all or some of L2P mapping data in the storage device.

It should be noted that embodiments of the host 700 corresponds to the foregoing method embodiments. For specific descriptions and descriptions of beneficial effects, refer to the method embodiments. Details are not described again. It should be noted that, apparatus embodiments may be used in cooperation with the foregoing methods, or may be separately used.

This application further provides a data processing device. FIG. 8 is a schematic diagram of a structure of a data processing device according to an embodiment of this application. The data processing device 800 (where the device 800 may be specifically a storage device, a host, or the like) includes a memory 801, a processor 802, a communication interface 804, and a bus 803. The memory 801, the processor 802, and the communication interface 804 implement mutual communication connection through the bus 803.

The memory 801 may be a read-only memory (Read-Only Memory, ROM), a static storage device, a dynamic storage device, or a random access memory (Random Access Memory, RAM). The memory 801 may store a program. When the program stored in the memory 801 is executed by the processor 802, the processor 802 and the communication interface 804 are configured to perform some or all steps of the data synchronization method in any embodiment of this application, that is, may perform some or all steps on a side of the storage device, or perform some or all steps on a side of the host.

The processor 802 may be a general-purpose central processing unit (Central Processing Unit, CPU), a microprocessor, an application-specific integrated circuit (Application-Specific Integrated Circuit, ASIC), a graphics processing unit (graphics processing unit, GPU), or one or more integrated circuits, and is configured to execute a related program, to implement a function that needs to be performed by a unit in the storage device or the host in the foregoing embodiments, or perform the data synchronization method in any embodiment.

The processor 802 may alternatively be an integrated circuit chip and has a signal processing capability. In an implementation process, the steps of the data synchronization method in any embodiment of this application may be completed by using a hardware integrated logic circuit in the processor 802 or instructions in a form of software. The foregoing processor 802 may be a general-purpose processor, a digital signal processor (Digital Signal Processor, DSP), an application-specific integrated circuit (ASIC), a field programmable gate array (Field Programmable Gate Array, FPGA) or another programmable logic device, a discrete gate or transistor logic device, or a discrete hardware component. The processor may implement or perform the methods, the steps, and logical block diagrams that are disclosed in embodiments of this application. The general-purpose processor may be a microprocessor, or the processor may be any conventional processor or the like. The steps of the data synchronization methods disclosed with reference to embodiments of this application may be directly performed by a hardware decoding processor, or may be performed by using a combination of hardware and a software module in the decoding processor. The software module may be located in a mature storage medium in the art, such as a random access memory, a flash memory, a read-only memory, a programmable read-only memory, an electrically erasable programmable memory, or a register. The storage medium is located in the memory 801. The processor 802 reads information in the memory 801, and in combination with hardware of the processor 802, completes functions that need to be performed by the units included in the storage device or the host in the foregoing embodiments, or performs the data synchronization method in any method embodiment of this application.

The communication interface 804 uses a transceiver apparatus such as but not limited to a transceiver, to implement communication between the data processing device 800 and another device or a communication network. For example, training data may be obtained through the communication interface 804.

The bus 803 may include a path for transmitting information between components (for example, the memory 801, the processor 802, and the communication interface 804) of the data processing device 800.

It should be noted that, although the data processing device 800 shown in FIG. 8 only shows the memory, the processor, and the communication interface, in a specific implementation process, a person skilled in the art should understand that the data processing device 800 further includes another component necessary for implementing normal running. In addition, based on a specific requirement, a person skilled in the art should understand that the data processing device 800 may further include a hardware component for implementing another additional function. In addition, a person skilled in the art should understand that the data processing device 800 may include only components necessary for implementing embodiments of this application, and does not need to include all the components shown in FIG. 8.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of the embodiments.

In addition, functional units in embodiments of this application may be integrated into one processing unit, or each unit may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a computer program product. The computer program product is stored in a storage medium, and includes several instructions for instructing a computer device (which may be a personal computer, a server, a network device, or the like) to perform all or some of the steps of the method described in embodiments of this application. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

In embodiments of this application, the word such as "example" or "for example" is used to represent giving an example, an illustration, or a description. Any embodiment or design scheme described as an "example" or "for example" in this application should not be explained as being more preferred or having more advantages than another embodiment or design scheme. Exactly, use of the word such as "example" or "for example" is intended to present a related concept in a specific manner.

In embodiments of this application, "at least one" means one or more, and "a plurality of" means two or more. "At least one of the following items (pieces)" or a similar expression thereof refers to any combination of these items, including any combination of singular items (pieces) or plural items (pieces). For example, at least one of a, b, or c may indicate: a, b, c, (a and b), (a and c), (b and c), or (a, b, and c), where a, b, and c may be singular or plural. The term "and/or" describes an association relationship between associated objects, and indicates that three relationships may exist. For example, A and/or B may indicate the following three cases: Only A exists, both A and B exist, and only B exists, where A and B may be singular or plural. The character "/" generally indicates an "or" relationship between the associated objects.

In addition, unless otherwise stated, ordinal numbers such as "first" and "second" in embodiments of this application are for differentiation between a plurality of objects, but are not intended to limit an order, a time sequence, priorities, or importance of the plurality of obj ects. For example, a first device and a second device are merely for ease of description, and do not indicate a difference of the first device and the second device in terms of a structure and a degree of importance. In some embodiments, the first device and the second device may alternatively be the same device.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A data synchronization method, applied to a storage device (102), wherein the storage device is used in a data storage system, the data storage system further comprises a host (101), and the method comprises the following steps:
when first logical address to physical address L2P mapping data in the storage device changes, determining, by the storage device, a second version number and a third version number based on a first version number and a version number sequence that correspond to the first L2P mapping data, wherein the version number sequence is a sequence of a plurality of cyclically arranged version numbers, the second version number is the 1^{st} version number after the first version number in the version number sequence, and the third version number is the 2^{nd} version number after the first version number in the version number sequence (301); and
when the third version number is different from a request version number currently stored in the storage device, determining, by the storage device, the second version number as a version number of second L2P mapping data, and sending a first synchronization request to the host, wherein the first synchronization request is used to request to synchronize the second L2P mapping data and the second version number to the host, the second L2P mapping data is changed first L2P mapping data, the request version number is a version number carried in a first read request that is most currently received by the storage device from the host, and the request version number is a version number of L2P mapping data stored in the host when the first read request is generated; or
when the third version number is the same as the request version number, determining, by the storage device, the second version number as the version number of the second L2P mapping data, and using the second L2P mapping data and the second version number as to-be-synchronized data, wherein the to-be-synchronized data is data to be synchronized to the host (302).

2. The method according to claim 1, wherein the method further comprises the following steps:
receiving, by the storage device, a second read request from the host, wherein the second read request carries a version number of L2P mapping data stored in the host when the second read request is generated, and the second read request is received by the storage device after the first read request; and
when the version number carried in the second read request is different from the version number carried in the first read request, updating, by the storage device, the request version number to the version number carried in the second read request.

3. The method according to claim 2, wherein the method further comprises the following step:
when the updated request version number is different from the third version number, and the storage device has the to-be-synchronized data, sending, by the storage device, a second synchronization request to the host, wherein the second synchronization request is used to request to synchronize the to-be-synchronized data to the host.

4. The method according to any one of claims 1 to 3, wherein a quantity of the plurality of version numbers is Y, and the Y version numbers are determined by N bits of data, wherein N is an integer greater than or equal to 1, and Y is an integer less than or equal to 2^{N}.

5. The method according to claim 4, wherein the synchronizing the second L2P mapping data and the second version number to the host specifically comprises the following step:
sending a host performance booster HPB table to the host, wherein the HPB table comprises the second L2P mapping data and the second version number, wherein
an index of an entry in the HPB table is a logical address in the second L2P mapping data, N bits of the entry in the HPB table are used to store the second version number, and M bits of the entry in the HPB table are used to store a physical address in the second L2P mapping data, wherein M is less than or equal to a first difference, the first difference is a difference between X and N, and X is a total quantity of bits of the entry in the HPB table.

6. The method according to claim 5, wherein when M is less than the first difference, Q bits of the entry in the HPB table are used to store integrity check information of the entry, wherein Q is a difference between the first difference and M.

7. The method according to any one of claims 1 to 6, wherein the method further comprises the following step:
when the third version number is the same as the request version number, and the second L2P mapping data changes, updating, by the storage device, the second L2P mapping data to third L2P mapping data, wherein the third L2P mapping data is changed second L2P mapping data.

8. The method according to any one of claims 1 to 7, wherein the L2P mapping data is L2P mapping data corresponding to all or some of entries in the storage device.

9. A data synchronization method, applied to a host, wherein the host is used in a data storage system, the data storage system further comprises a storage device, and the method comprises the following steps:
receiving, by the host, a first synchronization request sent by the storage device, wherein the first synchronization request is used to request to synchronize second L2P mapping data and a second version number, wherein the first synchronization request is sent when the storage device determines that a third version number is different from a request version number currently stored in the storage device; the second version number and the third version number are determined, based on a first version number and a version number sequence that correspond to first L2P mapping data, when the storage device determines that the first L2P mapping data changes, the version number sequence is a sequence of a plurality of cyclically arranged version numbers, the second version number is the 1^{st} version number after the first version number in the version number sequence, and the third version number is the 2^{nd} version number after the first version number in the version number sequence; the second L2P mapping data is changed first L2P mapping data; and the request version number is a version number carried in a first read request that is most currently received by the storage device from the host, and the request version number is a version number of L2P mapping data stored in the host when the first read request is generated; and
when the first synchronization request meets a synchronization condition, sending, by the host, first synchronization indication information to the storage device, to enable the storage device to synchronize, based on the first synchronization indication information, the second L2P mapping data and the second version number to the host.

10. The method according to claim 9, wherein the method further comprises the following step:
sending, by the host, a second read request to the storage device, wherein the second read request carries a version number of L2P mapping data stored in the host when the second read request is generated, and the second read request is sent by the host after the first read request, to enable the storage device to update the request version number to the version number carried in the second read request when the version number carried in the second read request is different from the version number carried in the first read request.

11. The method according to claim 10, wherein the method further comprises the following steps:
receiving, by the host, a second synchronization request sent by the storage device, wherein the second synchronization request is used to request to synchronize to-be-synchronized data, and the second synchronization request is sent when the storage device determines that the updated request version number is different from the third version number and the storage device has the to-be-synchronized data, wherein the to-be-synchronized data is data to be synchronized to the host, and the storage device determines the second L2P mapping data and the second version number as the to-be-synchronized data when determining that the third version number is the same as the request version number before the updating; and
when the second synchronization request meets the synchronization condition, sending, by the host, second synchronization indication information to the storage device, to enable the storage device to synchronize the to-be-synchronized data to the host based on the second synchronization indication information.

12. The method according to any one of claims 9 to 11, wherein a quantity of the plurality of version numbers is Y, and the Y version numbers are determined by N bits of data, wherein N is an integer greater than or equal to 1, and Y is an integer less than or equal to 2^{N}.

13. The method according to claim 12, wherein the method further comprises:
receiving a host performance booster HPB table sent by the storage device in response to the first synchronization indication information, wherein the HPB table comprises the second L2P mapping data and the second version number, wherein an index of an entry in the HPB table is a logical address in the second L2P mapping data, N bits of the entry in the HPB table are used to store the second version number, and M bits of the entry in the HPB table are used to store a physical address in the second L2P mapping data, wherein M is less than or equal to a first difference, the first difference is a difference between X and N, and X is a total quantity of bits of the entry in the HPB table.

14. The method according to claim 13, wherein when M is less than the first difference, Q bits of the entry in the HPB table are used to store integrity check information of the entry, wherein Q is a difference between the first difference and M.

15. The method according to any one of claims 9 to 14, wherein the L2P mapping data is L2P mapping data corresponding to all or some of entries in the storage device.

## Patentansprüche

1. Datensynchronisationsverfahren, das auf eine Speichervorrichtung (102) angewendet wird, wobei die Speichervorrichtung in einem Datenspeichersystem verwendet wird, das Datenspeichersystem ferner einen Host (101) umfasst und das Verfahren die folgenden Schritte umfasst:
wenn sich die ersten Zuordnungsdaten von logischer Adresse zu physikalischer Adresse, L2P, in der Speichervorrichtung ändern, Bestimmen, durch die Speichervorrichtung, einer zweiten Versionsnummer und einer dritten Versionsnummer auf der Grundlage einer ersten Versionsnummer und einer Versionsnummernfolge, die den ersten L2P-Zuordnungsdaten entsprechen, wobei die Versionsnummernfolge eine Folge aus einer Vielzahl von zyklisch angeordneten Versionsnummern ist, die zweite Versionsnummer die 1. Versionsnummer nach der ersten Versionsnummer in der Versionsnummernfolge ist und die dritte Versionsnummer die 2. Versionsnummer nach der ersten Versionsnummer in der Versionsnummernfolge (301) ist; und
wenn sich die dritte Versionsnummer von einer Anforderungsversionsnummer, die aktuell in der Speichervorrichtung gespeichert ist, unterscheidet, Bestimmen, durch die Speichervorrichtung, der zweiten Versionsnummer als eine Versionsnummer von zweiten L2P-Zuordnungsdaten und Senden einer ersten Synchronisationsanforderung an den Host, wobei die erste Synchronisationsanforderung dazu verwendet wird, anzufordern, die zweiten L2P-Zuordnungsdaten und die zweite Versionsnummer mit dem Host zu synchronisieren, die zweiten L2P-Zuordnungsdaten geänderte erste L2P-Zuordnungsdaten sind, die Anforderungsversionsnummer eine Versionsnummer ist, die in einer ersten Leseanforderung enthalten ist, die am aktuellsten durch die Speichervorrichtung von dem Host empfangen wird, und die Anforderungsversionsnummer eine Versionsnummer von L2P-Zuordnungsdaten ist, die in dem Host gespeichert sind, wenn die erste Leseanforderung erzeugt wird; oder
wenn die dritte Versionsnummer die gleiche ist wie die Anforderungsversionsnummer, Bestimmen, durch die Speichervorrichtung, der zweiten Versionsnummer als die Versionsnummer der zweiten L2P-Zuordnungsdaten und Verwenden der zweiten L2P-Zuordnungsdaten und der zweiten Versionsnummer als zu synchronisierende Daten, wobei die zu synchronisierenden Daten Daten sind, die mit dem Host (302) zu synchronisieren sind.

2. Verfahren nach Anspruch 1, wobei das Verfahren ferner den folgenden Schritt umfasst:
Empfangen, durch die Speichervorrichtung, einer zweiten Leseanforderung von dem Host, wobei die zweite Leseanforderung eine Versionsnummer von L2P-Zuordnungsdaten enthält, die in dem Host gespeichert sind, wenn die zweite Leseanforderung erzeugt wird, und die zweite Leseanforderung durch die Speichervorrichtung nach der ersten Leseanforderung empfangen wird; und
wenn sich Versionsnummer, die in der zweiten Leseanforderung enthalten ist, von der Versionsnummer, die in der ersten Leseanforderung enthalten ist, unterscheidet, Aktualisieren, durch die Speichereinrichtung, der Anforderungsversionsnummer auf die Versionsnummer, die in der zweiten Leseanforderung enthalten ist.

3. Verfahren nach Anspruch 2, wobei das Verfahren ferner den folgenden Schritt umfasst:
wenn sich die aktualisierte Anforderungsversionsnummer von der dritten Versionsnummer unterscheidet und die Speichervorrichtung die zu synchronisierenden Daten aufweist, Senden, durch die Speichervorrichtung, einer zweiten Synchronisationsanforderung an den Host, wobei die zweite Synchronisationsanforderung dazu verwendet wird, anzufordern, die zu synchronisierenden Daten mit dem Host zu synchronisieren.

4. Verfahren nach einem der Ansprüche 1 bis 3, wobei eine Menge der Vielzahl von Versionsnummern Y ist und die Y Versionsnummern durch N Datenbits bestimmt werden, wobei N eine ganze Zahl größer als oder gleich 1 ist und Y eine ganze Zahl kleiner als oder gleich 2^{N} ist.

5. Verfahren nach Anspruch 4, wobei das Synchronisieren der zweiten L2P-Zuordnungsdaten und der zweiten Versionsnummer mit dem Host insbesondere den folgenden Schritt umfasst:
Senden einer Host-Leistungssteigerer-Tabelle, HPB-Tabelle, an den Host, wobei die HPB-Tabelle die zweiten L2P-Zuordnungsdaten und die zweite Versionsnummer umfasst, wobei
ein Index eines Eintrags in der HPB-Tabelle eine logische Adresse in den zweiten L2P-Zuordnungsdaten ist, N Bits des Eintrags in der HPB-Tabelle dazu verwendet werden, die zweite Versionsnummer zu speichern, und M Bits des Eintrags in der HPB-Tabelle dazu verwendet werden, eine physikalische Adresse in den zweiten L2P-Zuordnungsdaten zu speichern, wobei M kleiner als oder gleich einer ersten Differenz ist, die erste Differenz eine Differenz zwischen X und N ist und X eine Gesamtmenge von Bits des Eintrags in der HPB-Tabelle ist.

6. Verfahren nach Anspruch 5, wobei, wenn M kleiner als die erste Differenz ist, Q Bits des Eintrags in der HPB-Tabelle dazu verwendet werden, Integritätsprüfungsinformationen des Eintrags zu speichern, wobei Q eine Differenz zwischen der ersten Differenz und M ist.

7. Verfahren nach einem der Ansprüche 1 bis 6, wobei das Verfahren ferner den folgenden Schritt umfasst:
wenn die dritte Versionsnummer die gleiche ist wie die Anforderungsversionsnummer und sich die zweiten L2P-Zuordnungsdaten ändern, Aktualisieren, durch die Speichervorrichtung, der zweiten L2P-Zuordnungsdaten auf dritte L2P-Zuordnungsdaten, wobei die dritten L2P-Zuordnungsdaten geänderte zweite L2P-Zuordnungsdaten sind.

8. Verfahren nach einem der Ansprüche 1 bis 7, wobei die L2P-Zuordnungsdaten L2P-Zuordnungsdaten sind, die sämtlichen oder einigen Einträgen in der Speichervorrichtung entsprechen.

9. Datensynchronisationsverfahren, das auf einen Host angewendet wird, wobei der Host in einem Datenspeichersystem verwendet wird, das Datenspeichersystem ferner eine Speichervorrichtung umfasst und das Verfahren die folgenden Schritte umfasst:
Empfangen, durch den Host, einer ersten Synchronisationsanforderung, die durch die Speichervorrichtung gesendet wird, wobei die erste Synchronisationsanforderung dazu verwendet wird, anzufordern, zweite L2P-Zuordnungsdaten und eine zweite Versionsnummer zu synchronisieren, wobei die erste Synchronisationsanforderung gesendet wird, wenn die Speichervorrichtung bestimmt, dass sich eine dritte Versionsnummer von einer Anforderungsversionsnummer unterscheidet, die aktuell in der Speichervorrichtung gespeichert ist; die zweite Versionsnummer und die dritte Versionsnummer auf der Grundlage einer ersten Versionsnummer und einer Versionsnummernfolge bestimmt werden, die ersten L2P-Zuordnungsdaten entsprechen, wenn die Speichervorrichtung bestimmt, dass sich die ersten L2P-Zuordnungsdaten ändern, die Versionsnummernfolge eine Folge einer Vielzahl von zyklisch angeordneten Versionsnummern ist, die zweite Versionsnummer die 1. Versionsnummer nach der ersten Versionsnummer in der Versionsnummernfolge ist und die dritte Versionsnummer die 2. Versionsnummer nach der ersten Versionsnummer in der Versionsnummernfolge ist; die zweiten L2P-Zuordnungsdaten geänderte erste L2P-Zuordnungsdaten sind; und die Anforderungsversionsnummer eine Versionsnummer ist, die in einer ersten Leseanforderung enthalten ist, die am aktuellsten durch die Speichervorrichtung von dem Host empfangen wird, und die Anforderungsversionsnummer eine Versionsnummer von L2P-Zuordnungsdaten ist, die in dem Host gespeichert sind, wenn die erste Leseanforderung erzeugt wird; und
wenn die erste Synchronisationsanforderung eine Synchronisationsbedingung erfüllt, Senden, durch den Host, von ersten Synchronisationsanzeigeinformationen an die Speichervorrichtung, um die Speichervorrichtung in die Lage zu versetzen, auf der Grundlage der ersten Synchronisationsanzeigeinformationen die zweiten L2P-Zuordnungsdaten und die zweite Versionsnummer mit dem Host zu synchronisieren.

10. Verfahren nach Anspruch 9, wobei das Verfahren ferner den folgenden Schritt umfasst:
Senden, durch den Host, einer zweiten Leseanforderung an die Speichervorrichtung, wobei die zweite Leseanforderung eine Versionsnummer von L2P-Zuordnungsdaten enthält, die in dem Host gespeichert sind, wenn die zweite Leseanforderung erzeugt wird, und die zweite Leseanforderung nach der ersten Leseanforderung durch den Host gesendet wird, um die Speichervorrichtung in die Lage zu versetzen, die Anforderungsversionsnummer auf die Versionsnummer, die in der zweiten Leseanforderung enthalten ist, zu aktualisieren, wenn sich die Versionsnummer, die in der zweiten Leseanforderung enthalten ist, von der Versionsnummer, die in der ersten Leseanforderung enthalten ist, unterscheidet.

11. Verfahren nach Anspruch 10, wobei das Verfahren ferner die folgenden Schritte umfasst:
Empfangen, durch den Host, einer zweiten Synchronisationsanforderung, die durch die Speichervorrichtung gesendet wird, wobei die zweite Synchronisationsanforderung dazu verwendet wird, anzufordern, zu synchronisierende Daten zu synchronisieren, und die zweite Synchronisationsanforderung gesendet wird, wenn die Speichervorrichtung bestimmt, dass sich die aktualisierte Anforderungsversionsnummer von der dritten Versionsnummer unterscheidet und die Speichervorrichtung die zu synchronisierenden Daten aufweist, wobei die zu synchronisierenden Daten Daten sind, die mit dem Host zu synchronisieren sind, und die Speichervorrichtung die zweiten L2P-Zuordnungsdaten und die zweite Versionsnummer als die zu synchronisierenden Daten bestimmt, wenn sie bestimmt, dass die dritte Versionsnummer die gleiche ist wie die Anforderungsversionsnummer vor dem Aktualisieren; und
wenn die zweite Synchronisationsanforderung die Synchronisationsbedingung erfüllt, Senden, durch den Host, von zweiten Synchronisationsanzeigeinformationen an die Speichervorrichtung, um die Speichervorrichtung in die Lage zu versetzen, die zu synchronisierenden Daten mit dem Host auf der Grundlage der zweiten Synchronisationsanzeigeinformationen zu synchronisieren.

12. Verfahren nach einem der Ansprüche 9 bis 11, wobei eine Menge der Vielzahl von Versionsnummern Y ist und die Y Versionsnummern durch N Datenbits bestimmt werden, wobei N eine ganze Zahl größer als oder gleich 1 ist und Y eine ganze Zahl kleiner als oder gleich 2^{N} ist.

13. Verfahren nach Anspruch 12, wobei das Verfahren ferner Folgendes umfasst:
Empfangen einer Host-Leistungssteigerer-Tabelle, HPB-Tabelle, die durch die Speichervorrichtung als Reaktion auf die ersten Synchronisationsanzeigeinformationen gesendet wird, wobei die HPB-Tabelle die zweiten L2P-Zuordnungsdaten und die zweite Versionsnummer umfasst, wobei ein Index eines Eintrags in der HPB-Tabelle eine logische Adresse in den zweiten L2P-Zuordnungsdaten ist, N Bits des Eintrags in der HPB-Tabelle dazu verwendet werden, die zweite Versionsnummer zu speichern, und M Bits des Eintrags in der HPB-Tabelle dazu verwendet werden, eine physikalische Adresse in den zweiten L2P-Zuordnungsdaten zu speichern, wobei M kleiner als oder gleich einer ersten Differenz ist, die erste Differenz eine Differenz zwischen X und N ist und X eine Gesamtmenge von Bits des Eintrags in der HPB-Tabelle ist.

14. Verfahren nach Anspruch 13, wobei, wenn M kleiner als die erste Differenz ist, Q Bits des Eintrags in der HPB-Tabelle dazu verwendet werden, Integritätsprüfungsinformationen des Eintrags zu speichern, wobei Q eine Differenz zwischen der ersten Differenz und M ist.

15. Verfahren nach einem der Ansprüche 9 bis 14, wobei die L2P-Zuordnungsdaten L2P-Zuordnungsdaten sind, die sämtlichen oder einigen Einträgen in der Speichervorrichtung entsprechen.

## Revendications

1. Procédé de synchronisation de données, appliqué à un dispositif de stockage (102), dans lequel le dispositif de stockage est utilisé dans un système de stockage de données, le système de stockage de données comprend également un hôte (101), et le procédé comprend les étapes suivantes :
lorsque des premières données de mappage d'une adresse logique à une adresse physique, L2P, dans le dispositif de stockage changent, la détermination, par le dispositif de stockage, d'un deuxième numéro de version et d'un troisième numéro de version sur la base d'un premier numéro de version et d'une séquence de numéros de version qui correspondent aux premières données de mappage L2P, dans lequel la séquence de numéros de version est une séquence d'une pluralité de numéros de version disposés de manière cyclique, le deuxième numéro de version est le 1^{er} numéro de version après le premier numéro de version dans la séquence de numéros de version, et le troisième numéro de version est le 2^{ème} numéro de version après le premier numéro de version dans la séquence de numéros de version (301) ; et
lorsque le troisième numéro de version est différent d'un numéro de version de demande actuellement stocké dans le dispositif de stockage, la détermination, par le dispositif de stockage, du deuxième numéro de version comme numéro de version de deuxièmes données de mappage L2P, et l'envoi d'une première demande de synchronisation à l'hôte, dans lequel la première demande de synchronisation est utilisée pour demander la synchronisation des deuxièmes données de mappage L2P et du deuxième numéro de version à l'hôte, les deuxièmes données de mappage L2P sont des premières données de mappage L2P modifiées, le numéro de version de demande est un numéro de version contenu dans une première demande de lecture qui est la plus couramment reçue par le dispositif de stockage en provenance de l'hôte, et le numéro de version de demande est un numéro de version de données de mappage L2P stockées dans l'hôte lorsque la première demande de lecture est générée ; ou
lorsque le troisième numéro de version est le même que le numéro de version de demande, la détermination, par le dispositif de stockage, du deuxième numéro de version comme numéro de version des deuxièmes données de mappage L2P, et l'utilisation des deuxièmes données de mappage L2P et du deuxième numéro de version comme données à synchroniser, dans lequel les données à synchroniser sont des données à synchroniser avec l'hôte (302).

2. Procédé selon la revendication 1, dans lequel le procédé comprend également les étapes suivantes :
la réception, par le dispositif de stockage, d'une seconde demande de lecture provenant de l'hôte, dans lequel la seconde demande de lecture contient un numéro de version de données de mappage L2P stockées dans l'hôte lorsque la seconde demande de lecture est générée, et la seconde demande de lecture est reçue par le dispositif de stockage après la première demande de lecture ; et
lorsque le numéro de version contenu dans la seconde demande de lecture est différent du numéro de version contenu dans la première demande de lecture, la mise à jour, par le dispositif de stockage, du numéro de version de demande vers le numéro de version contenu dans la seconde demande de lecture.

3. Procédé selon la revendication 2, dans lequel le procédé comprend également l'étape suivante :
lorsque le numéro de version de demande mis à jour est différent du troisième numéro de version, et que le dispositif de stockage possède les données à synchroniser, l'envoi, par le dispositif de stockage, d'une seconde demande de synchronisation à l'hôte, dans lequel la seconde demande de synchronisation est utilisée pour demander la synchronisation des données à synchroniser à l'hôte.

4. Procédé selon l'une quelconque des revendications 1 à 3, dans lequel une quantité de la pluralité de numéros de version est Y, et les Y numéros de version sont déterminés par N bits de données, dans lequel N est un entier supérieur ou égal à 1, et Y est un entier inférieur ou égal à 2^{N}.

5. Procédé selon la revendication 4, dans lequel la synchronisation des deuxièmes données de mappage L2P et du deuxième numéro de version avec l'hôte comprend spécifiquement l'étape suivante :
l'envoi d'une table d'amplification des performances de l'hôte, HPB, à l'hôte, dans lequel la table HPB comprend les deuxièmes données de mappage L2P et le deuxième numéro de version, dans lequel
un indice d'une entrée dans la table HPB est une adresse logique dans les deuxièmes données de mappage L2P, N bits de l'entrée dans la table HPB sont utilisés pour stocker le deuxième numéro de version, et M bits de l'entrée dans la table HPB sont utilisés pour stocker une adresse physique dans les deuxièmes données de mappage L2P, dans lequel M est inférieur ou égal à une première différence, la première différence est une différence entre X et N, et X est une quantité totale de bits de l'entrée dans la table HPB.

6. Procédé selon la revendication 5, dans lequel lorsque M est inférieur à la première différence, Q bits de l'entrée dans la table HPB sont utilisés pour stocker des informations de contrôle d'intégrité de l'entrée, dans lequel Q est une différence entre la première différence et M.

7. Procédé selon l'une quelconque des revendications 1 à 6, dans lequel le procédé comprend également l'étape suivante :
lorsque le troisième numéro de version est le même que le numéro de version de demande, et que les deuxièmes données de mappage L2P changent, la mise à jour, par le dispositif de stockage, des deuxièmes données de mappage L2P vers des troisièmes données de mappage L2P, dans lequel les troisièmes données de mappage L2P sont des deuxièmes données de mappage L2P modifiées.

8. Procédé selon l'une quelconque des revendications 1 à 7, dans lequel les données de mappage L2P sont des données de mappage L2P correspondant à la totalité ou à une partie d'entrées dans le dispositif de stockage.

9. Procédé de synchronisation de données, appliqué à un hôte, dans lequel l'hôte est utilisé dans un système de stockage de données, le système de stockage de données comprend également un dispositif de stockage, et le procédé comprend les étapes suivantes :
la réception, par l'hôte, d'une première demande de synchronisation envoyée par le dispositif de stockage, dans lequel la première demande de synchronisation est utilisée pour demander la synchronisation de deuxièmes données de mappage L2P et d'un deuxième numéro de version, dans lequel la première demande de synchronisation est envoyée lorsque le dispositif de stockage détermine qu'un troisième numéro de version est différent d'un numéro de version de demande actuellement stocké dans le dispositif de stockage ; le deuxième numéro de version et le troisième numéro de version sont déterminés, sur la base d'un premier numéro de version et d'une séquence de numéros de version qui correspondent à des premières données de mappage L2P, lorsque le dispositif de stockage détermine que les premières données de mappage L2P changent, la séquence de numéros de version est une séquence d'une pluralité de numéros de version disposés de manière cyclique, le deuxième numéro de version est le 1^{er} numéro de version après le premier numéro de version dans la séquence de numéros de version, et le troisième numéro de version est le 2^{ème} numéro de version après le premier numéro de version dans la séquence de numéros de version ; les deuxièmes données de mappage L2P sont des premières données de mappage L2P modifiées ; et le numéro de version de demande est un numéro de version contenu dans une première demande de lecture qui est la plus couramment reçue par le dispositif de stockage en provenance de l'hôte, et le numéro de version de demande est un numéro de version de données de mappage L2P stockées dans l'hôte lorsque la première demande de lecture est générée ; et
lorsque la première demande de synchronisation satisfait une condition de synchronisation, l'envoi, par l'hôte, de premières informations d'indication de synchronisation au dispositif de stockage, pour permettre au dispositif de stockage de synchroniser, sur la base des premières informations d'indication de synchronisation, les deuxièmes données de mappage L2P et le deuxième numéro de version avec l'hôte.

10. Procédé selon la revendication 9, dans lequel le procédé comprend également l'étape suivante :
l'envoi, par l'hôte, d'une seconde demande de lecture au dispositif de stockage, dans lequel la seconde demande de lecture contient un numéro de version de données de mappage L2P stockées dans l'hôte lorsque la seconde demande de lecture est générée, et la seconde demande de lecture est envoyée par l'hôte après la première demande de lecture, pour permettre au dispositif de stockage de mettre à jour le numéro de version de demande vers le numéro de version contenu dans la seconde demande de lecture lorsque le numéro de version contenu dans la seconde demande de lecture est différent du numéro de version contenu dans la première demande de lecture.

11. Procédé selon la revendication 10, dans lequel le procédé comprend également les étapes suivantes :
la réception, par l'hôte, d'une seconde demande de synchronisation envoyée par le dispositif de stockage, dans lequel la seconde demande de synchronisation est utilisée pour demander la synchronisation de données à synchroniser, et la seconde demande de synchronisation est envoyée lorsque le dispositif de stockage détermine que le numéro de version de demande mis à jour est différent du troisième numéro de version et que le dispositif de stockage possède les données à synchroniser, dans lequel les données à synchroniser sont des données à synchroniser avec l'hôte, et le dispositif de stockage détermine les deuxièmes données de mappage L2P et le deuxième numéro de version comme données à synchroniser lorsqu'il est déterminé que le troisième numéro de version est le même que le numéro de version de demande avant la mise à jour ; et
lorsque la seconde demande de synchronisation satisfait la condition de synchronisation, l'envoi, par l'hôte, de secondes informations d'indication de synchronisation au dispositif de stockage, pour permettre au dispositif de stockage de synchroniser les données à synchroniser avec l'hôte sur la base des secondes informations d'indication de synchronisation.

12. Procédé selon l'une quelconque des revendications 9 à 11, dans lequel une quantité de la pluralité de numéros de version est Y, et les Y numéros de version sont déterminés par N bits de données, dans lequel N est un entier supérieur ou égal à 1, et Y est un entier inférieur ou égal à 2^{N}.

13. Procédé selon la revendication 12, dans lequel le procédé comprend également :
la réception d'une table d'amplification des performances de l'hôte, HPB, envoyée par le dispositif de stockage en réponse aux premières informations d'indication de synchronisation, dans lequel la table HPB comprend les deuxièmes données de mappage L2P et le deuxième numéro de version, dans lequel un indice d'une entrée dans la table HPB est une adresse logique dans les deuxièmes données de mappage L2P, N bits de l'entrée dans la table HPB sont utilisés pour stocker le deuxième numéro de version, et M bits de l'entrée dans la table HPB sont utilisés pour stocker une adresse physique dans les deuxièmes données de mappage L2P, dans lequel M est inférieur ou égal à une première différence, la première différence est une différence entre X et N, et X est une quantité totale de bits de l'entrée dans la table HPB.

14. Procédé selon la revendication 13, dans lequel lorsque M est inférieur à la première différence, Q bits de l'entrée dans la table HPB sont utilisés pour stocker des informations de contrôle d'intégrité de l'entrée, dans lequel Q est une différence entre la première différence et M**.**

15. Procédé selon l'une quelconque des revendications 9 à 14, dans lequel les données de mappage L2P sont des données de mappage L2P correspondant à la totalité ou à une partie d'entrées dans le dispositif de stockage.
